# EUROPEAN PATENT SPECIFICATION

(11) **EP 2 678 548 B1**
(45) Date of publication and mention of the grant of the patent: **01.11.2017**
(21) Application number: 12749654.5
(22) Date of filing: 16.02.2012
(51) Int. Cl.: F01P 9/00, F01K 23/06, F02M 26/35, F01N 5/02

(54) **SYSTEM FOR CONVERTING THERMAL ENERGY TO MECHANICAL ENERGY IN A VEHICLE**
SYSTEM ZUR UMWANDLUNG VON WÄRMEENERGIE IN MECHANISCHE ENERGIE IN EINEM FAHRZEUG
SYSTÈME POUR CONVERTIR L'ÉNERGIE THERMIQUE EN ÉNERGIE MÉCANIQUE DANS UN VÉHICULE

(30) Priority: 25.02.2011 SE 1150169
(43) Date of publication of application: 01.01.2014
(73) Proprietor: Scania CV AB, 151 87 Södertälje (SE)
(72) Inventor: KARDOS, Zoltan, S-151 35 Södertälje (SE); JAHNS, Dieter, S-151 63 Södertälje (SE)
(74) Representative: Scania CV AB
(86) International application number: PCT/SE2012/050164
(87) International publication number: WO 2012/115572

(56) References cited:
- EP-A1- 2 053 208
- DE-A1-102006 043 139
- DE-A1-102008 053 066
- SE-C2- 533 402
- US-A- 4 901 531
- US-A1- 2009 241 543
- US-A1- 2010 180 584

## Description

### BACKGROUND TO THE INVENTION AND PRIOR ART

The present invention relates to a system for converting thermal energy to mechanical energy in a vehicle according to the preamble of claim 1.

When fuel is burnt in a combustion engine, chemical energy is converted to mechanical energy. A substantial part of the chemical energy is not converted to mechanical energy but to thermal energy which is released to the surroundings in various ways. An example of this is the thermal energy in exhaust gases which are discharged to surrounding air. Another example is thermal energy which is cooled away from various kinds of warm media in vehicles. An example of such warm media is the coolant in the cooling system which cools the combustion engine. The coolant is here usually cooled in a radiator situated at the front portion of the vehicle. Many combustion engines are supercharged. The charge air is usually cooled in at least one charge air cooler before it is led into the engine. A known practice for reducing discharges of nitrogen oxides is to recirculate part of the exhaust gases. The recirculating exhaust gases are cooled in at least one EGR cooler before they are recirculated to the engine.

WHR (waste heat recovery) systems are used to convert thermal energy to mechanical energy. A WHR system comprises a circuit with a pump which circulates a medium in a line circuit. The line circuit comprises an evaporator in which the medium is vaporised by heat from a heat source, and a turbine which is driven by the vaporised medium. When the medium expands through the turbine, part of the medium's thermal energy is converted to mechanical energy which may be utilised for direct operation or be converted to electric energy. The medium condenses in a condenser. It is important that the medium be cooled to a low temperature in the condenser, since this is advantageous for the efficiency of the WHR system.

The medium may be further cooled in an air-cooled condenser at a front portion of a vehicle. At this location the condenser has flowing through it a cooling air flow at the temperature of the surroundings. The circulating medium may thus be cooled to a temperature close to the temperature of the surroundings. The cooling which the circulating medium undergoes in such a condenser is closely related to the temperature of the surrounding air but also to other parameters such as the humidity of the air and the flow velocity of the cooling air through the charge air cooler. As the majority of these parameters depend on the state of the surrounding air, it is difficult to regulate the cooling in an air-cooled condenser so that the medium is cooled to a desired temperature.

Document 102008053066A1 relates to a system which has an internal combustion engine provided with an exhaust gas system, and a Rankine-circuit provided with working medium e.g. water. The exhaust gas system is thermally coupled to the Rankine-circuit. The working medium is cooled to condensation temperature by a condenser i.e. air cooled heat exchanger, where the condensation temperature is not smaller than 100 degree Celsius during normal operation of a motor vehicle. Overheating temperature of the working medium in the Rankine-circuit lies above 330 degree Celsius.

### SUMMARY OF THE INVENTION

The object of the present invention is to propose a system capable of converting thermal energy to mechanical energy in an efficient way while at the same time the condenser arrangement can be regulated and occupies a relatively small amount of space in the vehicle.

This object is achieved with the arrangement of the kind mentioned in the introduction which is characterised by the features indicated in the characterising part of claim 1. An advantage of an air-cooled condenser is that the medium can be cooled to a temperature close to the temperature of the surroundings. Cooling the medium to as low a temperature as possible is advantageous for the efficiency of the WHR system. A disadvantage of an air-cooled condenser is that it is difficult to regulate the cooling of the medium because the temperature and moisture of the surrounding air may vary. Another disadvantage of air-cooled condensers is that they require a relatively large fitting space at a front surface of the vehicle for them to be able to provide necessary cooling of the medium by surrounding air. Cooling the medium in a WHR system by means of a coolant-cooled condenser suffers the disadvantage that the medium cannot be cooled to as low a temperature as in an air-cooled condenser. An advantage of a coolant-cooled condenser is that it is possible by relatively simple means to adjust the coolant's temperature and flow through the condenser. The cooling of the medium can therefore be regulated. Another advantage of a coolant-cooled condenser is that it can be made significantly smaller than an air-cooled condenser of similar capacity. A coolant-cooled condenser may also be situated substantially anywhere in a vehicle.

The present invention uses a condenser arrangement whereby the medium is first cooled in a coolant-cooled condenser and thereafter in an air-cooled condenser. A coolant-cooled condenser and an air-cooled condenser situated in series in that order make it possible for the condenser arrangement to have substantially all of the aforesaid positive characteristics of the respective types of condenser. Where the medium undergoes a first step of cooling in a coolant-cooled condenser, the air-cooled condenser downstream may be made significantly smaller and occupy less space at the front portion of the vehicle. In the air-cooled condenser downstream the medium can be cooled to a temperature close to the temperature of the surroundings after having already been cooled to a low temperature in the coolant-cooled condenser. The possibility of regulating the coolant temperature and flow through the coolant-cooled condenser means that the whole condenser arrangement can be regulated.

According to an embodiment of the invention, the vehicle is powered by a combustion engine cooled by coolant which circulates in a cooling system, and the coolant in said cooling circuit which cools the medium in the first condenser will be at a lower temperature than the coolant which circulates in the engine's cooling system. It is possible, but not particularly efficient, to use the relatively warm coolant in the cooling system which cools the engine to cool the medium in the first evaporator. It is therefore appropriate to use a coolant which is at a lower temperature. If the medium is cooled to a low temperature in the coolant-cooled first condenser, the air-cooled second condenser need not have a particularly high capacity and may therefore occupy little space.

According to the invention, said cooling circuit constitutes a separate cooling system from the cooling system which cools the engine. Separate cooling system means that its coolant and components are separate from the engine's cooling system. Alternatively, said cooling circuit may form part of the cooling system which cools the engine and in which the coolant is at a significantly lower temperature than in the main part of the engine. Said cooling circuit comprises with advantage an air-cooled cooler in which the circulating coolant is at least partly cooled by air at the temperature of the surroundings. The coolant in the cooling circuit may therefore be at a very low temperature before it is used for cooling the medium in the first condenser. Said cooling circuit comprises with advantage not only the first condenser but also at least one cooler for cooling a further medium. In vehicles there is a need to cool a plurality of components to a lower temperature than can be achieved with the coolant in the vehicle's combustion system. Such components may be the refrigerant in an AC installation, gearbox oil and electrical control units.

According to a preferred embodiment of the invention, the system comprises means for regulating the cooling of the medium in the first condenser. By regulating the coolant flow and temperature through the first condenser the cooling of the condenser arrangement can be regulated in a satisfactory way. The cooling in an air-cooled condenser depends largely on the surrounding air's temperature, humidity and flow velocity through the condenser. On the basis of information about these parameters the cooling in an air-cooled condenser can be estimated but not controlled. Both the flow and temperature of the coolant which cools the medium in a coolant-cooled condenser can be regulated. The flow may be regulated by control of the coolant pump which circulates the coolant in the cooling circuit. The temperature of the coolant may be raised by activating a heating unit or the like to supply thermal energy to the cooling circuit and may be lowered by disconnecting one or more of the further components which are cooled by the coolant which circulates in the cooling circuit.

According to a preferred embodiment of the invention, the medium is caused to absorb thermal energy in an evaporator from exhaust gases which are led out from the engine in an exhaust line. The exhaust gases from a combustion engine are a very good heat source which has a high temperature. This thermal energy is normally lost to the surroundings. The medium may alternatively, or in combination, be caused to absorb thermal energy in an evaporator from exhaust gases which are recirculated to the engine in a return line. The recirculating exhaust gases are normally cooled in at least one EGR cooler before they are led to the engine. In this case the recirculating exhaust gases provide effective cooling while at the same time part of the thermal energy in them is converted to mechanical energy.

According to an embodiment of the present invention, the vehicle is provided with a turbine adapted to being driven by the exhaust gases in the exhaust line, and the system comprises at least one evaporator which absorbs thermal energy from exhaust gases in the exhaust line at a location downstream of the turbine, and at least one evaporator which absorbs thermal energy from recirculating exhaust gases which are led into the return line at a location upstream of the turbine. In this case the medium is warmed first by the exhaust gases in the exhaust line upstream of the turbine, which are at the lower temperature, and thereafter by the recirculating exhaust gases in the return line, which are at the higher temperature. The medium may in this case be warmed to a high temperature which results in good production of mechanical energy in the turbine. The system may comprise two evaporators arranged in series in the return line. As the exhaust gases are at such a high temperature in the return line, it may in many cases be appropriate to subject the exhaust gases to two steps of cooling in order to utilise as much thermal energy as possible from the exhaust gases, while at the same time the recirculating exhaust gases provide cooling to a low temperature. Having evaporators both in the exhaust line and in the line for recirculation of exhaust gases make it possible for a relatively large part of the thermal energy in the engine's exhaust gases to be used for generating mechanical energy in the turbine.

### BRIEF DESCRIPTION OF THE DRAWING

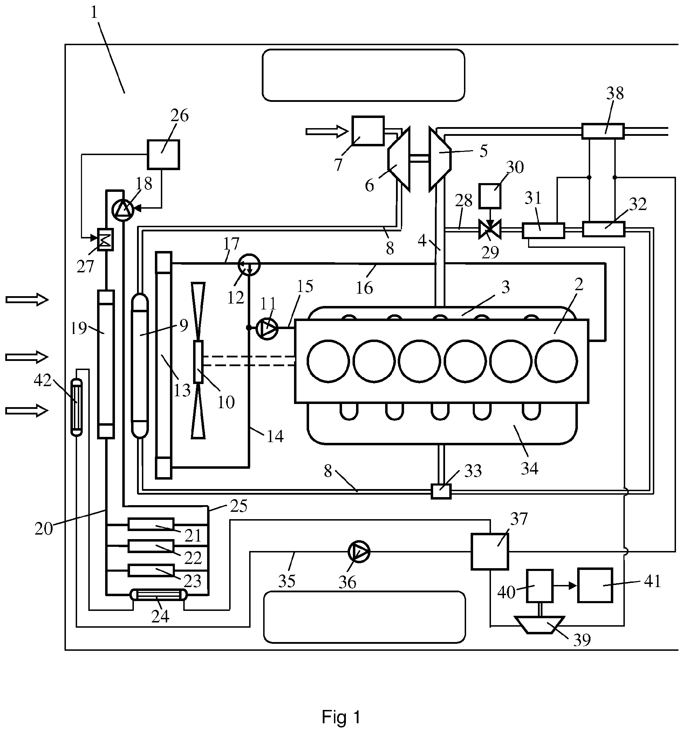

A preferred embodiment of the invention is described below by way of example with reference to the attached drawing, in which
- Fig. 1: depicts an arrangement for conversion of thermal energy to mechanical energy in a vehicle.

### DETAILED DESCRIPTION OF A PREFERRED EMBODIMENT OF THE INVENTION

Fig. 1 depicts a vehicle 1 powered by a supercharged combustion engine 2. The vehicle 1 may be a heavy vehicle powered by a supercharged diesel engine. The exhaust gases from the cylinders of the engine 2 are led via an exhaust manifold 3 to an exhaust line 4. The exhaust gases in the exhaust line 4, which will be at above atmospheric pressure, are led to a turbine 5 of a turbo unit. The turbine 5 is thus provided with driving power which is transferred, via a connection, to a compressor 6. The compressor 6 thereupon compresses air which is led into an inlet line 8 via an air filter 7. A charge air cooler 9 is provided in the inlet line 8. The charge air cooler 9 is situated in a region at a front portion of the vehicle 1. The purpose of the charge air cooler 9 is to cool the compressed air which is led to the engine 2. The compressed air is cooled in the charge air cooler 9 by air which is forced through it by a radiator fan 10 and the draught caused by the vehicle's forward movement. The radiator fan 10 is driven by the engine 2 via a suitable connection.

The engine 2 is cooled by coolant which circulates in a cooling system. The coolant is circulated in the cooling system by a coolant pump 11. The cooling system comprises a thermostat 12. The coolant in the cooling system is cooled in a radiator 13 fitted close to the radiator fan 10. The radiator 13 is situated downstream of the charge air cooler 9 with respect to the direction of cooling air flow in the region. The cooling system comprises a line 14 which leads the coolant from the radiator 13 to the engine 2. The coolant pump 11 is situated in a line 15. The cooling system comprises a line 16 which leads the coolant from the engine 2 to the thermostat 12, and a line 17 which leads coolant from the thermostat 12 to the coolant-cooled first condenser 13. At times when the coolant is at below a desired operating temperature, the thermostat 12 directs it from the line 16 to the engine 2 via the lines 14, 15. At times when the coolant is at above a desired operating temperature, the thermostat 12 directs it from the line 16 to the radiator 13 via the line 17.

The vehicle 1 has a low-temperature cooling circuit with a circulating coolant which is at a considerably lower temperature than the coolant in the engine's cooling system. The coolant is circulated in the low-temperature cooling circuit by means of a coolant pump 18. The coolant is the low-temperature cooling circuit is intended to be cooled in a radiator 19 fitted in the region at the forward portion of the vehicle. The radiator 19 is situated upstream of the charge air cooler 9 with respect to the direction of cooling air flow in the region. The low-temperature cooling circuit comprises a line 20 which leads cold coolant from the radiator 19. The line 20 thereafter divides into four parallel lines. The first parallel line comprises a cooler in the form of a condenser 21 to cool a refrigerant in an AC unit of the vehicle. The second parallel line comprises an oil cooler 22 to cool gearbox oil of the vehicle. The third parallel line comprises a cooler 23 to cool at least one electrical control unit of the vehicle. The fourth parallel line comprises a condenser 24 in a WHR system. The coolant in the low-temperature cooling circuit cools here a medium which circulates in the WHR system. The medium is cooled in the condenser 24 to a temperature at which it condenses. The four parallel lines join together in a common line 25 which leads the coolant back to the radiator 19. The low-temperature cooling circuit comprises a control unit 26 which can regulate the operation of the coolant pump 18 and hence the flow of coolant through the low-temperature cooling circuit. The control unit 26 may also, where necessary, activate a warming unit 27 to warm the coolant if it is at too low a temperature. The warming unit 27 may be an electrical unit or a heat exchanger in which the coolant in the low-temperature cooling circuit is warmed by warm coolant from the engine's cooling system. If the temperature of the coolant in the low-temperature cooling circuit needs to be lowered, the control unit 26 can shut off the coolant flow through one or more of the mutually parallel coolers 21-24 by means of undepicted valves in the respective parallel lines. The control unit 26 can thus regulate the flow and the temperature of the coolant which circulates in the low-temperature cooling circuit. The control unit 26 may be a computer unit provided with suitable software for this purpose.

The combustion engine 2 is provided with a system for recirculation of exhaust gases known as EGR (exhaust gas recirculation). Such recirculation involves exhaust gases being mixed with the compressed air which is led to the engine's cylinders. The result is a lowered combustion temperature and a lower content of nitrogen oxides NOₓ in the exhaust gases. Part of the exhaust gases from the exhaust line 4 is recirculated through a return line 28. The return line 28 comprises an EGR valve 29 by which the exhaust flow in the return line 28 can be regulated to control the amount of exhaust gases recirculated. A control unit 30 is adapted to controlling the EGR valve 29 on the basis of information about the engine's current operating state. The control unit 30 may be a computer unit provided with suitable software for this purpose. The return line 28 comprises a first EGR cooler 31 in which the recirculating exhaust gases undergo a first step of cooling, and a second EGR cooler 32 in which the recirculating exhaust gases undergo a second step of cooling. After being cooled in said EGR coolers 31, 32, the recirculating exhaust gases are mixed with the compressed air in the inlet line 8, e.g. by means of a mixing device 33. The mixture of compressed air and recirculating exhaust gases is then led to the respective cylinders of the engine via a manifold 34.

The vehicle 1 is equipped with a WHR system for converting thermal energy in exhaust gases led out from a combustion engine 2 to mechanical energy. The system comprises a line circuit 35 with a pump 36 which is adapted to pressurising and circulating the medium in the line circuit 35. The medium is led initially by the pump 36 to a heat exchanger 37, which may be a recuperator, in which it undergoes a certain warming. The medium is led from the heat exchanger 37 to an evaporator 32 which in this case takes the form of a second EGR cooler in which the medium is warmed by the recirculating exhaust gases. The medium mixture is led in parallel to an evaporator 38 which takes the form of a heat exchanger in which the medium is warmed by the exhaust gases in the exhaust line 4 at a location downstream of the turbine 5. The line circuit 35 thereafter joins together so that the medium from the evaporators 32, 38 is led jointly to a further evaporator 31 in the form of the first EGR cooler, in which it undergoes a further step of warming. When it leaves the evaporator 31, the medium is fully vaporised and extra-heated. The gaseous medium leaving the first EGR cooler 31 is led to a turbine 39. The medium expands through the turbine 39, converting part of the thermal energy in the medium mixture to mechanical energy. The turbine 39 drives in this case a generator 40 which converts the mechanical energy to electrical energy. The electrical energy is stored in an energy store 41. The electrical energy stored in the energy store 41 may with advantage be used to propel the vehicle or operate components of it. Alternatively, the turbine 39 may be connected to a flywheel or similar mechanical energy storage unit which is connectable to the vehicle's power train. When the flywheel is connected to the power train, the vehicle is provided with extra propulsive power.

When the gaseous medium has expanded in the turbine 39, it will be at a lower pressure and a lower temperature. The gaseous medium is led from the turbine 39 to the heat exchanger 37 in which it is cooled by the liquid medium from the pump 36. The gaseous medium is thereafter led to the first condenser 24 in which it is cooled by the coolant in the low-temperature cooling circuit. The medium is then led to a second condenser 42 situated downstream of the first condenser 24 with respect to the direction of its flow in the line circuit 35. The second condenser 42 is situated at a front portion of the vehicle 1 at a location partly in front of the coolant-cooled second condenser 19. The medium is cooled in the second condenser 42 by air at the temperature of the surroundings. The surrounding air is drawn through the second condenser 42 by the air fan 10 and the draught caused by the vehicle's forward movement. The gaseous medium changes to liquid when it is cooled in the first condenser 24 and the second condenser 42. The medium may thus be cooled to a temperature close to the temperature of the surroundings when it leaves the second condenser 42. The now liquid medium is led from the second condenser 42 to the pump 36.

In this case, a condenser arrangement comprising a coolant-cooled first condenser 24 and an air-cooled second condenser 42 is used. The usually extra-heated gaseous medium is cooled in the coolant-cooled first condenser 24 to the condensation temperature of the medium. The medium thus begins to condense in the coolant-cooled first condenser 24. The medium is thereafter led to the air-cooled second condenser 42 in which a remaining portion of the gaseous medium condenses. The liquid medium in the air-cooled second condenser 42 is thereafter extra-cooled to a temperature close to the temperature of the surroundings. Since the medium has already undergone a good first step of cooling in the coolant-cooled first condenser 24, it may be subjected to a second step of cooling to a temperature close to the temperature of the surroundings by means of a relatively small air-cooled second condenser 42 which may therefore occupy relatively little space at the front portion of the vehicle.

In this case the flow and temperature of the coolant in the low-temperature cooling circuit may thus be controlled by means of a control unit 26. The control unit 26 can therefore control the cooling of the medium in the coolant-cooled first condenser 24. On the basis of knowing, for example, the temperature and humidity of the surrounding air and the velocity of the cooling air flow through the air-cooled condenser 42, the control unit 26 can estimate the cooling of the medium in the air-cooled condenser 42. This information enables the control unit 26 to, for example, regulate the operation of the coolant pump 18 in the low-temperature cooling circuit so that the medium fully undergoes desired cooling in the first condenser 24 and the second condenser 42. The condenser arrangement thus makes it possible to regulate the cooling of the medium in the condenser arrangement, which is not possible in an air-cooled condenser.

Where the air-cooled condenser 42 occupies relatively little space at the front portion of the vehicle, the coolant in the low-temperature cooling circuit can also be partly cooled by air at the temperature of the surroundings. This makes it possible for the low-temperature cooling circuit to be at a low temperature when it leaves the radiator 19. The cooling of the medium in the first condenser 24 and in the mutually parallel coolers 21, 23 thus becomes effective.

In this case, thermal energy is absorbed from the engine's exhaust gases. The exhaust gas from a combustion engine is a very good heat source from which to recover thermal energy. If the engine 2 is a diesel engine, the exhaust gases may be at a temperature of about 600-700°C upstream of the turbo unit's turbine 5 at times when the engine 2 is under heavy load. The recirculating exhaust gases in the return line 28 may thus initially be at this temperature. The temperature of the exhaust gases downstream of the turbine 5 may be of the order of 200-300°C. The medium is in this case warmed initially in two mutually parallel evaporators 32, 38. In the evaporator 38, the medium is warmed by exhaust gases which have expanded through the turbine. In the other evaporator, the medium is warmed by exhaust gases in the return line 28 after having undergone a first step of cooling. In both cases the medium may be warmed by exhaust gases which are at a similar temperature, which may thus be 200-300°C. All of the medium is then led to evaporator 31, in which it is warmed by recirculating exhaust gases in the return line 28. The recirculating exhaust gases may thus here be at a temperature of about 600-700°C. However, the media used in WHR systems have an upper temperature which should not be exceeded. Suitable dimensioning of the evaporators 31, 32, 38 will make it possible for medium to be warmed to a high temperature appropriate to the specific medium before it is led to the turbine 39. A high temperature of the medium led to the turbine makes it possible to produce a large amount of mechanical energy.

The invention is in no way restricted to the embodiment to which the drawing refers but may be varied freely within the scopes of the claims.

## Claims

1. A system for converting thermal energy to mechanical energy in a vehicle which has a cooling circuit with a circulating coolant, which system comprises a line circuit (35), a pump (36) for recirculating a medium in the line circuit, at least one evaporator (31, 32, 38) in which the medium is caused to absorb thermal energy from a heat source (4, 28) so that it becomes vaporised, a turbine (39) adapted to being driven by the vaporised medium in order to generate mechanical energy, and a condenser arrangement (24, 42) in which the medium is caused to give off thermal energy so that it condenses, wherein the condenser arrangement comprises a first condenser (24) in which the medium gives off thermal energy to coolant which circulates in said cooling circuit, and a second condenser (42) which is situated downstream of the first condenser (24) with respect to the medium's direction of flow in the line circuit (35) and in which the medium gives off thermal energy to air at the temperature of the surroundings, **characterised in that** said cooling circuit constitutes a cooling system separate from the cooling system which cools the engine (2).

2. A system according to claim 1, **characterised in that** the vehicle is powered by a combustion engine (2) which is cooled by coolant which circulates in a cooling system, the coolant in said cooling circuit which cools the medium in the first condenser (24) being at a lower temperature than the coolant which circulates in the engine's cooling system.

3. A system according to any one of the foregoing claims, **characterised in that** said cooling circuit comprises an air-cooled cooler (19) in which the circulating coolant is at least partly cooled by air at the temperature of the surroundings.

4. A system according to claim 3, **characterised in that** said cooling circuit comprises not only the first condenser (24) but also at least one further cooler (21-23) for cooling a further medium.

5. A system according to any one of the foregoing claims, **characterised in that** the system comprises means (18, 26, 27) for regulating the cooling of the medium in the first condenser (24).

6. A system according to any one of claims 2 to 5 above, **characterised in that** the medium is caused to absorb thermal energy in an evaporator (38) from exhaust gases which are led out from the engine in an exhaust line (4).

7. A system according to any one of claims 2 to 6 above, **characterised in that** the medium is caused to absorb thermal energy in at least one evaporator (31, 32) from recirculating exhaust gases in a return line (28).

8. A system according to claims 6 and 7, **characterised in that** the vehicle has a turbine (5) adapted to being driven by the exhaust gases in the exhaust line (4), and that the system comprises at least one evaporator (38) which absorbs thermal energy from exhaust gases in the exhaust line (4) at a location downstream of the turbine (5), and at least one evaporator (31, 32) which absorbs thermal energy from recirculating exhaust gases which are led into the return line (28) at a location upstream of the turbine (5).

9. A system according to claim 8, **characterised in that** the system comprises at least two evaporators (31, 32) arranged in series in the return line (28).

## Patentansprüche

1. System zum Umwandeln von Wärmeenergie in mechanische Energie in einem Fahrzeug, welches einen Kühlkreislauf mit einem umlaufenden Kühlmittel aufweist, wobei das System einen Leitungskreislauf (35), eine Pumpe (36) zum Zurückführen eines Mediums in den Leitungskreislauf, zumindest einen Verdampfer (31, 32, 38), in welchem das Medium veranlasst wird, Wärmeenergie von einer Wärmequelle (4, 28) zu absorbieren, sodass es verdampft wird, eine Turbine (39), welche ausgebildet ist, durch das verdampfte Medium angetrieben zu werden, um mechanische Energie zu erzeugen, und eine Kondensatoranordnung (24, 42) umfasst, in welcher das Medium veranlasst wird, Wärmeenergie abzugeben, sodass es kondensiert, wobei die Kondensatoranordnung einen ersten Kondensator (24) umfasst, in welchem das Medium Wärmeenergie an das im Kühlkreislauf umlaufende Kühlmittel abgibt, und einen zweiten Kondensator (42) umfasst, welcher stromabwärts des ersten Kondensators (24) mit Bezug zur Fließrichtung des Mediums im Leitungskreislauf (35) angeordnet ist und in welchem das Medium Wärmeenergie an Luft bei Umgebungstemperatur abgibt, **dadurch gekennzeichnet, dass** der Kühlkreislauf ein Kühlsystem bildet, welches getrennt ist von dem den Motor (2) kühlenden Kühlsystem.

2. System nach Anspruch 1, **dadurch gekennzeichnet, dass** das Fahrzeug durch einen Verbrennungsmotor (2) angetrieben wird, welcher durch ein in einem Kühlsystem umlaufendes Kühlmittel gekühlt wird, wobei das das Medium im ersten Kondensator (24) kühlende Kühlmittel im Kühlkreislauf eine geringere Temperatur aufweist als das im Kühlsystem des Motors umlaufende Kühlmittel.

3. System nach einem der vorangehenden Ansprüche, **dadurch gekennzeichnet, dass** der Kühlkreislauf einen luftgekühlten Kühler (19) umfasst, in welchem das umlaufende Kühlmittel zumindest teilweise durch Luft bei Umgebungstemperatur gekühlt wird.

4. System nach Anspruch 3, **dadurch gekennzeichnet, dass** der Kühlkreislauf nicht nur den ersten Kondensator (24) umfasst, sondern auch zumindest einen weiteren Kühler (21-23) zum Kühlen eines weiteren Mediums.

5. System nach einem der vorangehenden Ansprüche, **dadurch gekennzeichnet, dass** das System Mittel (18, 26, 27) zum Regeln des Kühlens des Mediums im ersten Kondensator (24) umfasst.

6. System nach einem der Ansprüche 2 bis 5, **dadurch gekennzeichnet, dass** das Medium veranlasst wird, in einem Verdampfer (38) Wärmeenergie von Abgasen aufzunehmen, welche vom Motor in eine Abgasleitung (4) abgeführt werden.

7. System nach einem der Ansprüche 2 bis 6, **dadurch gekennzeichnet, dass** das Medium veranlasst wird, in zumindest einem Verdampfer (31, 32) Wärmeenergie von zurückgeführten Abgasen in einer Rückführleitung (28) aufzunehmen.

8. System nach Anspruch 6 und 7, **dadurch gekennzeichnet, dass** das Fahrzeug eine Turbine (5) aufweist, welche ausgebildet ist, durch die Abgase in der Abgasleitung (4) angetrieben zu werden, und dass das System zumindest einen Wärmeenergie von Abgasen in der Abgasleitung (4) aufnehmenden Verdampfer (38) an einer Position stromabwärts der Turbine (5) umfasst und zumindest einen Verdampfer (31, 32) umfasst, welcher Wärmeenergie von zurückgeführten Abgasen aufnimmt, welche an einer Position stromaufwärts der Turbine (5) in die Rückführleitung (28) eingeführt werden.

9. System nach Anspruch 8, **dadurch gekennzeichnet, dass** das System zumindest zwei Verdampfer (31, 32) umfasst, welche hintereinander in der Rückführleitung (28) angeordnet sind.

## Revendications

1. Système pour convertir de l'énergie thermique en énergie mécanique dans un véhicule qui comporte un circuit de refroidissement avec un agent de refroidissement en circulation, ce système comprenant un circuit de conduites (35), une pompe (36) pour faire recirculer un produit dans le circuit de conduites, au moins un évaporateur (31, 32, 38) dans lequel le produit est amené à absorber de l'énergie thermique à partir d'une source de chaleur (4, 28) de telle sorte qu'il devienne vaporisé, une turbine (39) adaptée à être actionnée par le produit vaporisé de façon à générer de l'énergie mécanique, et un agencement de condenseurs (24, 42) dans lequel le produit est amené à restituer de l'énergie thermique de telle sorte qu'il se condense, l'agencement de condenseurs comprenant un premier condenseur (24) dans lequel le produit restitue de l'énergie thermique à un agent de refroidissement qui circule dans ledit circuit de refroidissement, et un deuxième condenseur (42) qui est situé en aval du premier condenseur (24) par rapport à la direction d'écoulement du produit dans le circuit de conduites (35), et dans lequel le produit restitue de l'énergie thermique à de l'air à la température de l'environnement, **caractérisé en ce que** ledit circuit de refroidissement constitue un système de refroidissement séparé du système de refroidissement qui refroidit le moteur (2).

2. Système selon la revendication 1, **caractérisé en ce que** le véhicule est entraîné par un moteur à combustion (2) qui est refroidi par un agent de refroidissement qui circule dans un système de refroidissement, l'agent de refroidissement dans ledit circuit de refroidissement qui refroidit le produit dans le premier condenseur (24) étant à une température inférieure à celle de l'agent de refroidissement qui circule dans le système de refroidissement du moteur.

3. Système selon l'une quelconque des revendications précédentes, **caractérisé en ce que** ledit circuit de refroidissement comprend un refroidisseur refroidi par air (19), dans lequel l'agent de refroidissement en circulation est au moins partiellement refroidi par de l'air à la température de l'environnement.

4. Système selon la revendication 3, **caractérisé en ce que** ledit circuit de refroidissement comprend non seulement le premier condenseur (24), mais également au moins un autre refroidisseur (21 à 23) pour refroidir un autre produit.

5. Système selon l'une quelconque des revendications précédentes, **caractérisé en ce que** le système comprend des moyens (18, 26, 27) pour réguler le refroidissement du produit dans le premier condenseur (24).

6. Système selon l'une quelconque des revendications 2 à 5 ci-dessus, **caractérisé en ce que** le produit est amené à absorber de l'énergie thermique dans un évaporateur (38) à partir de gaz d'échappement qui sont acheminés hors du moteur dans une conduite d'échappement (4).

7. Système selon l'une quelconque des revendications 2 à 6 ci-dessus, **caractérisé en ce que** le produit est amené à absorber de l'énergie thermique dans au moins un évaporateur (31, 32) à partir de gaz d'échappement en recirculation dans une conduite de retour (28).

8. Système selon les revendications 6 et 7, **caractérisé en ce que** le véhicule comporte une turbine (5) adaptée à être actionnée par les gaz d'échappement dans la conduite d'échappement (4), et **en ce que** le système comprend au moins un évaporateur (38) qui absorbe de l'énergie thermique à partir de gaz d'échappement dans la conduite d'échappement (4) en un emplacement en aval de la turbine (5), et au moins un évaporateur (31, 32) qui absorbe de l'énergie thermique à partir de gaz d'échappement en recirculation qui sont acheminés dans la conduite de retour (28) en un emplacement en amont de la turbine (5).

9. Système selon la revendication 8, **caractérisé en ce que** le système comprend au moins deux évaporateurs (31, 32) disposés en série dans la conduite de retour (28).
